Europäisches Patentamt

European Patent Office

Office européen des brevets

(19)

(11) Numéro de publication: **0 056 753**
**B1**

(12) **FASCICULE DE BREVET EUROPEEN**

(45) Date de publication du fascicule du brevet:
**22.08.84**

(21) Numéro de dépôt: **82400041.8**

(22) Date de dépôt: **11.01.82**

(51) Int. Cl.³: **E 02 B 17/08,** F 16 H 55/26,
F 16 H 19/04

(54) Dispositif élévateur pour plate-forme marine auto-élévatrice.

(30) Priorité: **14.01.81 FR 8100512**

(43) Date de publication de la demande:
**28.07.82 Bulletin 82/30**

(45) Mention de la délivrance du brevet:
**22.08.84 Bulletin 84/34**

(84) Etats contractants désignés:
**AT BE CH DE FR GB IT LI LU NL SE**

(56) Documents cités:
**FR - A - 2 174 430**
**FR - A - 2 346 281**
**US - A - 3 743 247**

(73) Titulaire: **BRISSONNEAU ET LOTZ MARINE Société anonyme dite:, Rue de la Métallurgie Zone Industrielle, F-44470 Carquefou-Nantes (FR)**

(72) Inventeur: **Havard, Jean, 18, Avenue Thalie, F-44470 Carquefou (FR)**

(74) Mandataire: **Lejet, Christian, JEUMONT-SCHNEIDER Service Propriété Industrielle 31-32, Quai de Dion Bouton, F-92811 Puteaux Cedex (FR)**

ACTORUM AG

## Description

La présente invention concerne les installations de plates-formes marines dites auto-élévatrices notamment prévues pour effectuer des opérations de forage en mer, pourvues d'une pluralité de jambes et d'une pluralité de dispositifs élévateurs associés du type à pignons et crémaillère permettant de régler la position et le maintien en position de ladite plate-forme sur lesdites jambes.

A cet effet, sur chacune des jambes est fixée rigidement au moins une crémaillère double à dentures opposées à laquelle est associé un mécanisme élévateur comprenant au moins une paire de pignons fixés élastiquement ou non à la structure de la plate-forme par l'intermédiaire d'un bâti, chacun desdits pignons engrenant respectivement avec l'une des deux dentures de ladite crémaillère et étant entraîné en rotation par des moyens moteurs et réducteurs, de manière à déterminer dans un sens ou dans l'autre les mouvements requis. Un tel dispositif élévateur a, par exemple, été décrit dans la revue «Lapis Industrial Opportunies», No 37, octobre 1961, sous le titre «Platform Jacking mechanisms» (Mécanismes élévateurs de plate-forme), pp. 21 à 24.

Dans ce genre d'installation, l'une des difficultés rencontrées réside dans le fait que des structures métalliques importantes et pesantes sont requises pour assurer le positionnement latéral des dents des crémaillères par rapport à celles des pignons puisqu'il résulte des courants sous-marins et des vents, de faibles déplacements latéraux des jambes par rapport aux mécanismes élévateurs de la plate-forme.

En outre, lorsque le bâti est monté flottant par rapport à la structure de la plate-forme, le contact n'est pas régulier entre les dentures de la crémaillère et les dents des différents jeux de pignons dès que le bâti s'incline par rapport à la verticale, d'autant plus que ce dernier a un moment de renversement important du fait de son poids et du fait que son centre de gravité est relativement éloigné de la crémaillère.

Pour assurer le positionnement latéral des dents des crémaillères par rapport à celles des pignons, le brevet US-A No 3743247 prévoit un dispositif élévateur (correspondant au préambule de la revendication 1) ayant des éléments de guidage. Ces éléments de guidage sont situés de part et d'autre du plan de la crémaillère, cependant avec un certain jeu.

La présente invention a pour but d'obvier à ces inconvénients au moyen d'un dispositif élévateur du type à pignons et crémaillère prévu pour assurer le positionnement latéral précis et automatique des jambes par rapport aux mécanismes élévateurs, que ceux-ci soient montés flottants par rapport à la structure de la plate-forme ou soudés à cette dernière.

Selon l'invention, le dispositif élévateur comprend les caractéristiques techniques décrites dans la partie caractérisante de la revendication 1.

Cette disposition présente l'avantage de rendre autocentreurs les bâtis auxquels sont fixés les pignons. De ce fait, il résulte, en plus, un équilibrage des forces appliquées aux jambes qui, dans certains cas, peuvent alors être allégées.

On comprendra mieux les caractéristiques et avantages de l'invention en se référant à la description suivante, et au dessin annexé qui représente à titre d'exemples non limitatifs deux formes préférées de réalisation de l'invention.

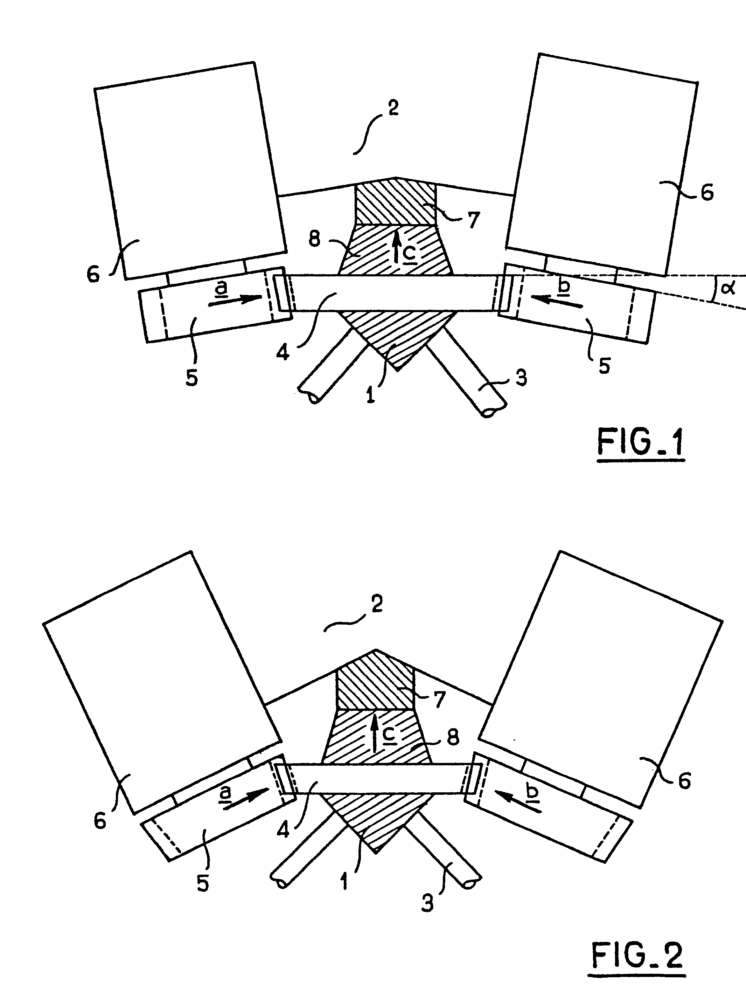

La fig. 1 représente partiellement en coupe horizonale une jambe de la plate-forme équipée d'un dispositif élévateur conformément à l'invention.

La fig. 2 représente une variante de la fig. 1. Sur les figures, la référence 1 désigne une des jambes de la plate-forme 2, la référence 3 les entretoises disposées en treillis de la charpente associée aux jambes. La crémaillère double 4 à taille oblique est solidaire de la jambe 1. Les pignons 5 correspondants, montés dans un bâti et entraînés en rotation par les moyens moteurs et réducteurs 6, engrènent sur les dentures de la crémaillère 4. Le bâti, non représenté sur la figure, peut être indifféremment monté flottant par rapport à la plate-forme, par exemple au moyen de coussins élastiques, ou bien fixé fermement à la plate-forme par soudage.

Une butée longitudinale 7, solidaire de la plate-forme, est disposée en regard d'un élément de guidage 8 solidaire de la jambe 1.

Comme on peut le constater sur les figures, les deux forces a et b exercées latéralement par les pignons 5 sur les dentures de la crémaillère 4 ne sont pas opposées, et il en résulte une force c tendant à appliquer l'élément de guidage 8 solidaire de la jambe 1 contre la butée 7 solidaire du bâti du mécanisme élévateur. De ce fait, cet élément de guidage 8 est toujours en contact avec la butée 7, et ce pour toutes les jambes de la plate-forme. Le positionnement latéral constant entre dents des pignons 5 et dentures de la crémaillère 4 est donc maintenu et les forces appliquées aux différentes butées 7 s'équilibrent entre elles.

Sur la fig. 1, les pignons 5 sont de type cylindrique normal tandis que, sur la fig. 2, ils sont de type tronconique, ce qui permet de modifier, en fonction de l'angle des tailles respectives, l'amplitude de la force résultante c appliquée à la butée 7.

Bien que seuls deux exemples préférés de réalisation aient été donnés, il est évident que toutes variantes et modifications qui y seraient apportées portant sur le nombre et la forme des éléments considérés ne sortiraient pas du cadre de l'invention tel que défini par les revendications.

C'est ainsi que toutes variations de l'angle α entre pignon et crémaillère pourraient être adoptées. Toutefois, cet angle est de préférence compris entre 1 et 10° et, plus précisément, égal à 2 ou 3°.

L'emplacement de la butée pourrait être modifié dans le cas d'utilisation de deux butées en vue d'obtenir le même résultat. Enfin, une telle butée pourrait également être fixée à la structure de la plate-forme par des moyens élastiques.

## Revendications

1. Dispositif élévateur du type à pignons et crémaillère prévu pour permettre de régler verticalement la position d'une plate-forme marine (2) et de maintenir cette dernière dans la position désirée sur une pluralité de jambes (1), sur chacune desquelles est fixée rigidement au moins une crémaillère double (4), à dentures opposées, à laquelle est associé un mécanisme élévateur comprenant au moins une paire de pignons (5) fixés élastiquement ou non à la structure de la plate-forme par l'intermédiaire d'un bâti, chacun desdits pignons engrenant respectivement avec l'une des deux dentures de la crémaillère associée, de manière à être situés de part et d'autre de la crémaillère, lesdits pignons étant entraînés en rotation par des moyens moteurs et déducteurs (6) de manière à déterminer dans un sens ou dans l'autre, les mouvements requis, et au moins un élément rigide formant butée latérale (7) solidaire dudit bâti disposé longitudinalement entre la plate-forme (2) et chaque jambe (1), caractérisé en ce que la crémaillère (4) comporte des dentures à taille oblique, de telle sorte qu'une force (c) tende à appliquer une partie de ladite jambe (1) contre ladite butée (7) et, par suite, que le positionnement relatif des dents desdits pignons (5) et de la denture de ladite crémaillère (4) reste constant.

2. Dispositif selon la revendication 1, caractérisé en ce que lesdits pignons (5) sont à taille oblique.

3. Dispositif selon l'une des revendications 1 ou 2, caractérisé en ce que l'angle α entre pignon (5) et crémaillère (4) est compris entre 1 et 10°.

4. Dispositif selon la revendication 3, caractérisé en ce que l'angle α est de l'ordre de 2 à 3°.

## Patentansprüche

1. Hebevorrichtung vom Typ mit Ritzeln und einer Zahnstange, zum Einstellen der Höhe einer Offshore-Plattform (2) und zum Halten derselben in der gewünschten Stellung auf einer Mehrzahl von Stelzen (1), an denen jeweils wenigstens eine doppelte Zahnstange (4) starr befestigt ist, die einander gegenüberliegende Verzahnungen aufweist und der ein Hubmechanismus zugeordnet ist, welcher versehen ist mit wenigstens zwei Ritzeln (5), die elastisch oder unelastisch an der Plattformstruktur über ein Gehäuse befestigt sind, wobei jedes dieser Ritzel mit einer der beiden Verzahnungen der zugeordneten Zahnstange derart in Eingriff ist, dass es sich auf der einen bzw. anderen Seite der Zahnstange befindet, und wobei diese Ritzel durch Antriebs- und Untersetzungsmittel (6) derart in Drehung versetzt werden, dass sie die erforderlichen Bewegungen in dem einem oder anderen Sinne bestimmen, und mit wenigstens einem starren Element, das einen seitlichen Anschlag (7) bildet, welcher fest mit dem Gehäuse verbunden und in Längsrichtung zwischen der Plattform (2) und jeder Stelze (1) angeordnet ist, dadurch gekennzeichnet, dass die Zahnstange (4) schräggestellte Verzahnungen aufweist, so dass eine Kraft (c) bestrebt ist, einen Teil der Stelze (1) gegen den Anschlag (7) anzudrücken und infolgedessen die Relativstellung zwischen den Zähnen der Ritzel (5) und der Verzahnung der Zahnstange (4) konstant bleibt.

2. Vorrichtung nach Anspruch 1, dadurch gekennzeichnet, dass die Ritzel (5) eine schräggestellte Verzahnung aufweisen.

3. Vorrichtung nach Anspruch 1 oder 2, dadurch gekennzeichnet, dass der Winkel α zwischen Ritzel (5) und Zahnstange (4) zwischen 1 und 10° beträgt.

4. Vorrichtung nach Anspruch 3, dadurch gekennzeichnet, dass der Winkel α die Grössenordnung von 2 bis 3° aufweist.

## Claims

1. Lifting device of rack and pinion type, for making it possible to adjust vertically the position of an offshore platform (2) and to hold the said platform in the desired position on a plurality of legs (1) on each of which there is rigidly secured at least one double rack (4) with opposite tooth systems, with which rack there is associated a lifting mechanism comprising at least one pair of pinions (5) secured elastically or otherwise to the structure of the platform by means of a frame, each of the said pinions meshing respectively with one of the two tooth systems of the associated rack, in such a manner as to be situated one at each side of the rack, the said pinions being driven in rotational movement by geared motor means (6), so as to bring about the required movements in one direction or the other, and at least one rigid element constituting a lateral abutment (7) solid with the said frame situated longitudinally between the platform (2) and each leg (1), characterised in that the rack (4) comprises bevel tooth systems, in such a manner that a force (c) tends to apply a portion of the said leg (1) against the said abutment (7) and, consequently, the relative positioning of the teeth of the said pinions (5) and of the tooth system of the said rack (4) remains constant.

2. Device according to Claim 1, characterised in that the said pinions (5) are provided with bevel tooth systems.

3. Device according to any one of Claims 1 and 2, characterised in that the angle α between pinion (5) and rack (4) is between 1 and 10°.

4. Device according to Claim 3, characterised in that the angle α is of the order of 2 to 3°.

FIG.1

FIG.2

5